# EUROPÄISCHE PATENTSCHRIFT

(11) **EP 1 484 238 B1**
(45) Veröffentlichungstag und Bekanntmachung des Hinweises auf die Patenterteilung: **09.01.2008**
(21) Anmeldenummer: 04008582.1
(22) Anmeldetag: 08.04.2004
(51) Int. Cl.: B62D 35/00, B62D 29/04, B62D 25/08

(54) **Luftleiteinrichtung für ein Kraftfahrzeug**
Spoiler for a vehicle
Déflecteur pour un véhicule automobile

(30) Priorität: 06.06.2003 DE 10325653
(43) Veröffentlichungstag der Anmeldung: 08.12.2004
(73) Patentinhaber: Dr.Ing. h.c. F. Porsche Aktiengesellschaft, 70435 Stuttgart (DE)
(72) Erfinder: Jungert, Dieter, 71287 Weissach (DE)

(56) Entgegenhaltungen:
- WO-A-02/051688
- DE-A1- 10 160 748

## Beschreibung

Bei der Erfindung wird ausgegangen von einer Luftleiteinrichtung für ein Kraftfahrzeug, gemäß Oberbegriff des Anspruchs 1.

Die WO 02/051688 A2 beschreibt eine gattungsgemäße Luftleiteinrichtung für ein Kraftfahrzeug, die ein Betätigungselement aufweist, das unter einer elastischen Außenhaut angeordnet ist. Je nach Stellung des Betätigungselements wird die Luftströmung über die Außenhaut derart geleitet, dass ein Spoiler gebildet wird, wenn sich das Betätigungselement in einer ausgefahrenen Ruhestellung befindet. In einer Ruhestellung ist der Spoiler quasi eingefahren. Die elastische Außenhaut kann aus einem Faserverbundwerkstoff hergestellt sein und dementsprechend Fasern aufweisen, die in einer elastischen und dehnbaren Matrix eingebettet sind. Die Fasern können hingegen undehnbar beispielsweise aus Aramid oder Stahl gefertigt sein.

Aus der nachveröffentlichten DE 101 60 748 A1 geht eine Luftleiteinrichtung hervor, die ein Betätigungselement für eine Spoilerlippe aufweist, welche Spoilerlippe sich ganz oder teilweise über die Fahrzeugbreite erstreckt. Mittels des Betätigungselements ist die Spoilerlippe aus einer eingefahrenen Ruhestellung in eine ausgefahrene Betriebsstellung verlagerbar, wobei für die Spoilerlippe ein elastisches und dehnbares Material gewählt ist.

Aufgabe der Erfindung ist es, eine Luftleiteinrichtung der eingangs genannten Art zu optimieren.

Gelöst wird diese Aufgabe mit einer Luftleiteinrichtung, die die in Anspruch 1 genannten Merkmale besitzt. Weitere, die Erfindung ausgestaltende Merkmale sind in den Unteransprüchen angegeben.

Die mit der Erfindung hauptsächlich erzielten Vorteile sind darin zu sehen, dass mit den im wesentlichen undehnbaren Fasern der ersten Fasergruppe eine insbesondere in ausgefahrener Betriebsstellung formsteife Spoilerlippe bereit gestellt ist, die auch bei hohen Fahrgeschwindigkeiten und entsprechend hohen Luftdruckkräften kaum bzw. unwesentlich verformt wird, wodurch die gewünschte aerodynamische Wirkung der Spoilerlippe erhalten bleibt. Durch die undehnbaren Fasern mit der erfindungsgemäßen Ausrichtung quer zur Breitenerstreckung der Spoilerlippe verbleibt deren Dehnbarkeit in Richtung der Breitenerstreckung, was insbesondere für Kraftfahrzeuge mit einer gerundeten Bugform vorteilhaft ist. Durch die Verwendung des Faserverbundwerkstoffes ist die Spoilerlippe widerstandsfähiger bei Fremdkörpereinwirkung, so dass zudem das Betätigungselement durch die Spoilerlippe abgeschirmt wird. Außerdem ist die Matrix des Faserverbundwerkstoffes mit einer zweiten Fasergruppe verstärkt, die Fasern aufweist, die in Richtung der Breitenerstreckung der Spoilerlippe verlaufen und die elastisch dehnbar sind. Die Festigkeit der Spoilerlippe wird dadurch weiter verbessert und die Dehnbarkeit in Richtung der Breitenerstreckung bleibt erhalten. Außerdem können durch die elastisch dehnbaren Fasern der zweiten Fasergruppe höhere Rückstellkräfte für die Spoilerlippe bereit gestellt werden, wenn diese beim Bewegen von der Ruhestellung in die ausgefahrene Betriebsstellung in Richtung der Fahrzeugbreite gedehnt wird.

Um die Formsteifigkeit der Spoilerlippe in der ausgefahrenen Betriebsstellung weiter zu erhöhen, werden die Merkmale des Anspruchs 4 vorgeschlagen.

Dadurch, dass die Fasern zumindest teilweise um das biegeelastische Element herumgeführt werden, erhält - wie dies Anspruch 5 beschreibt - die Spoilerlippe auch im Bereich ihres freien Endes eine hohe Formsteifigkeit.

Mit den in Anspruch 7 genannten Merkmalen wird hinsichtlich der Herstellung der Spoilerlippe eine Vereinfachung erzielt.

Wie in Anspruch 8 weiter angegeben, wird die Formsteifigkeit der Spoilerlippe an einem vorgegebenen Bereich, nämlich dem Sollbiegebereich reduziert, wodurch die Spoilerlippe scharnierartig aus der Ruhe- in die Betriebsstellung und zurück verlagerbar ist.

In besonders bevorzugter Ausführungsform entsprechend Anspruch 11 ist das Betätigungselement pneumatisch betrieben und wird durch einen sich zumindest abschnittweise über die Fahrzeugbreite erstreckenden Schlauch gebildet, der wenigstens eine aufblasbare Kammer aufweist und aus einem dehnbaren und elastischen Material hergestellt ist. Insbesondere kommt hierfür das Material der Matrix des Faserverbundwerkstoffes der Spoilerlippe zur Verwendung. Ein derartiges aufblasbares

Betätigungselement, welches in Ruhestellung entleert und damit zusammenfaltbar ist, weist einen geringen Platzbedarf auf und gewährleistet dennoch ausreichende Betätigungskräfte, um die Spoilerlippe in die ausgefahrene Betriebsstellung überführen zu können. Beim Entleeren des Schlauches bzw. der Kammer wirken die vorstehend erwähnten Rückstellkräfte, die in der Spoilerlippe selbst aufgebaut wurden, welche somit aus der Betriebsstellung in die eingefahrene Ruhestellung selbsttätig zurückverlagert wird und dabei den Schlauch bzw. die Kammer zusammenfaltet.

Damit der Schlauch bzw. die Kammer mit ausreichend hohem Druck befüllt werden kann, ist gemäß Anspruch 12 für die Wand der Kammer bzw. des Schlauches eine Faserverstärkung vorgesehen.

Nach einer Weiterbildung gemäß Anspruch 13 ist die Faserverstärkung für die Wand der Kammer bzw. des Schlauches durch im wesentlichen undehnbare Fasern gebildet, wie sie für die erste Fasergruppe verwendet werden. Die Fasern werden in der Wand um die Kammer bzw. den Schlauch zumindest teilweise herumgeführt. Durch die Fasern wird ein Aufblasen der Kammer bzw. des Schlauches in radialer Richtung begrenzt, so dass unabhängig von der Druckbeaufschlagung des Schlauches bzw. der Kammer ein gewünschter Aufblasquerschnitt des Betätigungselements nicht überschritten wird. Die Spoilerlippe wird so in Ihrer Betriebsstellung bei jeder Betätigung dieselbe Lage einnehmen.

Bevorzugt wird gemäß Anspruch 15 eine Ausführungsform, bei der der Sollbiegebereich benachbart zum Befestigungsabschnitt ausgebildet ist, wodurch die Spoilerlippe klappenartig aus ihrer Ruhestellung in die ausgefahrene Betriebsstellung und zurückbringbar ist.

Die Erfindung wird nachfolgend anhand von Ausführungsbeispielen mit Bezug auf die Zeichnung näher erläutert.

Es zeigen:
Fi. 1a ausschnittweise ein Kraftfahrzeug mit einer Frontpartie und einer Luftleiteinrichtung,
Fig. 1b eine vergrößerte Detaildarstellung der Luftleiteinrichtung nach Fig. 1a,
Fig. 2a nach einem ersten Ausführungsbeispiel die Luftleiteinrichtung in Schnittdarstellung,
Fig. 2b eine vergrößerte Detaildarstellung eines Betätigungselements nach Fig. 2a und
Fig. 3 die Luftleiteinrichtung nach einem zweiten Ausführungsbeispiel.

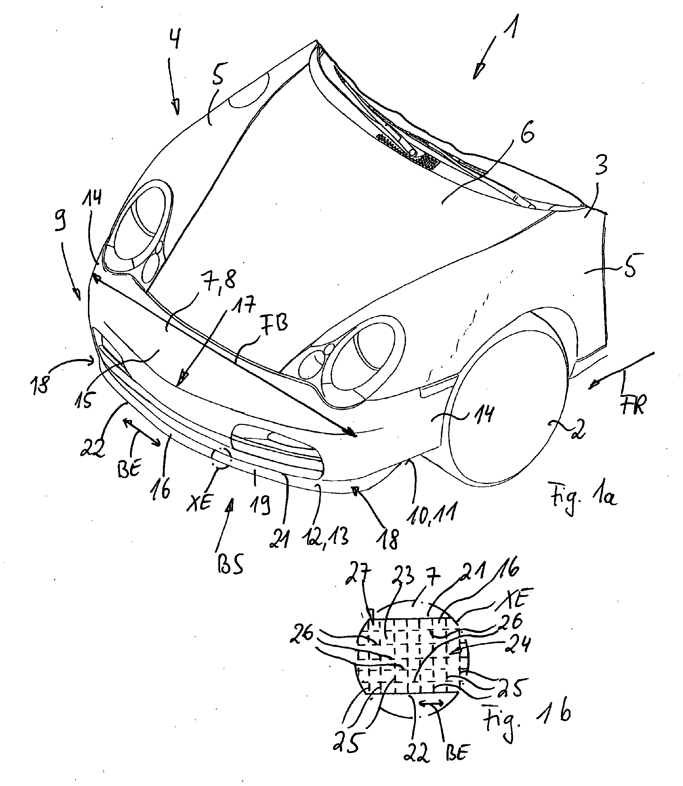

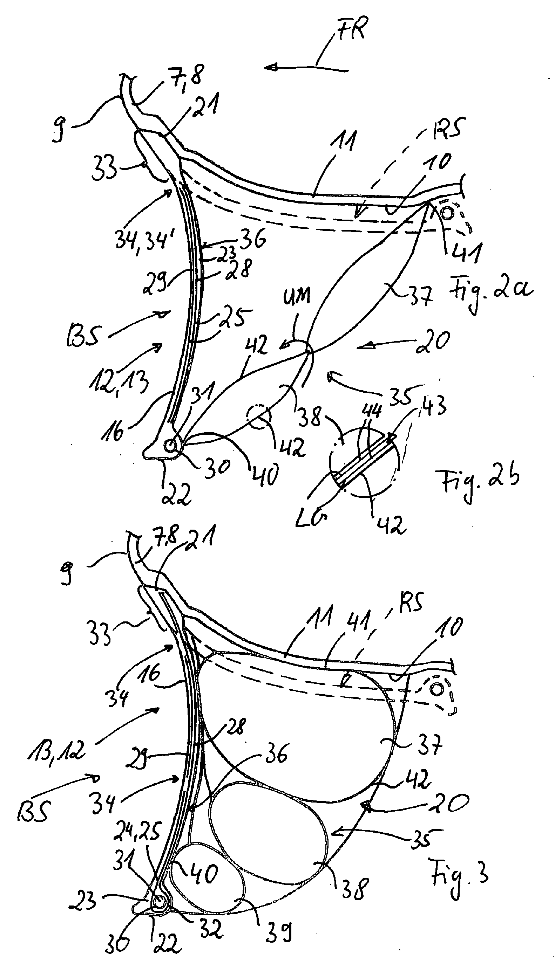

Fig. 1a zeigt ausschnittweise ein Kraftfahrzeug 1, von dessen von Rädern 2 getragenen Aufbau 3 lediglich eine Frontpartie 4 zu sehen ist. Die Frontpartie 4 umfasst Teile der Fahrzeugaußenhaut bildende seitliche Kotflügel 5, eine dazwischen angeordnete Haube 6 sowie ein der Haube 6 und den Kotflügeln 5 vorgelagerteres Bugteil 7, welches ein Verkleidungsteil. 8 für einen dahinter angeordneten Stoßfänger (nicht dargestellt) darstellen kann. Mithin bildet das Bugteil 7 das vordere Ende 9 des Kraftfahrzeugs 1 bzw. der Frontpartie 4. An der Unterseite 10 der Frontpartie 4, insbesondere an dem unteren, entgegen der Fahrtrichtung FR verlaufenden Abschnitt 11 (Fig. 2a) des Bugteils 7, ist eine Luftleiteinrichtung 12 angeordnet, die einen Frontspoiler 13 des Kraftfahrzeugs 1 bildet. Im Bereich des Bugteils 7 weist das Kraftfahrzeug 1 eine Fahrzeugbreite FB auf, die zwischen seitlichen Längsfortsätzen 14 des Bugteils 7 gemessen wird, welche Längsfortsätze 14 über eine Basis 15 des somit U - förmigen Bugteils 7 verbunden sind.

Die Luftleiteinrichtung 12 erstreckt sich mit einer streifenförmigen Spoilerlippe 16 etwa über die Fahrzeugbreite FB und kann ferner - wie in Fig. 1a dargestellt - bis in die seitlichen Längsabschnitten 14 herumgeführt sein. Unabhängig davon, ob die Spoilerlippe 16 bis in die Längsabschnitte 14 reicht, ergibt sich für den Verlauf der Spoilerlippe 16 eine Kontur, die der gerundeten Kontur 17 der Basis 15 des Bugteils 7 folgt. Durch ihre Erstreckung bis in die Längsfortsätze 14 können gerundete Eckbereiche 18 der Spoilerlippe 16 vorgesehen sein.

In Fig. 1a ist die Luftleiteinrichtung 12 in einer ausgefahrenen, etwa aufrechten Betriebsstellung BS gezeigt, in der die Spoilerlippe 16 eine nach unten gerichtete Verlängerung 19 des Bugteils 7 darstellt, was im übrigen aus den Fig. 2a und 3 deutlicher hervorgeht. In dieser Betriebsstellung BS wirkt die Spoilerlippe 16 als aerodynamisches Luftströmungsleitelement, das die Luftströmung im Fahrbetrieb des Kraftfahrzeugs 1 je nach gewünschten Vorgaben, wie beispielsweise günstiger Luftwiderstandsbeiwert, optimierte Abtriebskräfte oder ähnliches, beeinflusst. Die Luftleiteinrichtung 12 kann ferner aus der ausgefahrenen Betriebsstellung BS in eine eingefahrene, nach hinten gerichtete und etwa horizontale Ruhestellung RS verbracht werden, die in den Fig. 2a und 3 durch eine gestrichelt angedeutete Spoilerlippe 16 dargestellt ist. In der Ruhestellung RS weist die Luftleiteinrichtung 12 im wesentlichen keine luftströmungsleitende Wirkung an dem Kraftfahrzeug 1 auf. Aus der Ruhestellung RS in die ausgefahrene Betriebsstellung BS wird die Spoilerlippe 16 über eine Betätigungseinrichtung 20 verlagert, die - in Fahrtrichtung FR gesehen - hinter der Spoilerlippe 16 liegt und weiter unten näher beschrieben ist.

Die in Fig. 1a mit XE gekennzeichnete Einzelheit der Spoilerlippe 16 ist in Fig. 1b vergrößert dargestellt. Die Spoilerlippe 16 ist mit ihrem oberen Befestigungsende 21 mit dem Bugteil 7 verbunden und ihr unteres Ende bildet ein freies Ende 22. Die Spoilerlippe 16 ist aus einem Faserverbundwerkstoff hergestellt, dessen Matrix 23 dehnbar und elastisch ist und insbesondere aus Kunststoff oder bevorzugt aus einem Elastomer hergestellt ist. In die Matrix 23 des Faserverbundwerkstoffes ist innenliegend eine erste Fasergruppe 24 eingebettet, die mehrere etwa parallel zueinander verlaufende Fasern 25 aufweist, die überdies quer, insbesondere rechtwinklig, zur Richtung der Fahrzeugbreite FB bzw. quer zur Richtung der Breitenerstreckung BE der Spoilerlippe 16 ausgerichtet sind. Die Fasern 25 der ersten Fasergruppe 24 sind im wesentlichen undehnbar, das heißt, bei den im Fahrbetrieb des Kraftfahrzeugs 1 an der Spoilerlippe 16 wirkenden Kräften bzw. bei der Bewegung von der Ruhestellung RS in die Betriebsstellung BS unterliegen diese Fasern 25 keiner oder nur einer sehr unwesentlichen Längenveränderung. Die Spoilerlippe 16 erhält dadurch eine hohe Steifigkeit senkrecht zu ihrer Breitenerstreckung BE, so dass ein Abknicken oder übermäßiges Biegen aufgrund von Luftströmungsdruck, der im Fahrbetrieb des Kraftfahrzeugs 1 wirkt, weitgehend vermieden wird. Als Werkstoff für die Fasern 25 der ersten Fasergruppe 24 könnte Polyester, Polyamid oder Aramid verwendet werden.

Gemäß Fig. 1b können in die Matrix 23 mehrere Fasern 26 einer zweiten Fasergruppe 27 eingebettet sein, die in Richtung der Breitenerstreckung BE der Spoilerlippe 16 verlaufen, also entlang der Fahrzeugbreite FB. Im gezeigten Ausführungsbeispiel sind die Fasern 25 der ersten Fasergruppe 24 und die Fasern 26 der zweiten Fasergruppe 27 etwa rechtwinklig zueinander orientiert und die Fasern 25 verlaufen etwa rechtwinklig zur Breitenerstreckung BE bzw. die Fasern 26 verlaufen parallel zur Breitenerstreckung BE der Spoilerlippe 16. Ferner sind die Fasern 26 der zweiten Fasergruppe 27 aus einem dehnbaren Material, insbesondere Kunststoff, hergestellt, da die der gerundeten Kontur des Bugteils 7 folgende Spoilerlippe 16 beim Ausfahren von der Ruhestellung RS in die Betriebsstellung BS in Richtung der Breitenerstreckung BE gedehnt wird, was durch die dehnbaren Fasern 26 unwesentlich oder nicht behindert wird. Dennoch verstärken die dehnbaren Fasern 26 den Faserverbundwerkstoff.

Die Fasern 25 und 26 der ersten und zweiten Fasergruppe 24 und 27 können als Gewebe, Gestrick oder Gewirk oder dgl. in die Matrix 23 eingebettet sein. Alternativ könnten die Fasern 25 und 26 lose zueinander angeordnet sein und erst durch die Matrix 23 lagefixiert werden. Die Fasern 25 der ersten Fasergruppe 24 können ferner in mehreren Lagen 28 und 29 (Fig. 2a und 3) und etwa parallel zueinander verlaufend ausgerichtet sein, wobei der Faserverbundwerkstoff vorzugsweise einschichtig hergestellt ist. In den Fig. 2a und 3 sind Fasern 26 der zweiten Fasergruppe 27 der Einfachheit halber nicht eingezeichnet. Ansonsten sind in den Fig. 1a bis 3 gleiche bzw. gleichwirkende Teile mit identischen Bezugszeichen versehen.

Aus den Fig. 2a und 3 geht ferner hervor, dass an dem freien Ende 22 der Spoilerlippe 16 ein rechtwinklig durch die Zeichnungsebene verlaufender Kanal 30 in der Spoilerlippe 16 ausgebildet ist, der mithin entlang der Breitenerstreckung BE der Spoilerlippe 16 verläuft. In diesem Kanal 30 ist ein biegeelastisches und ggf. zugelastisches Element 31, beispielsweise ein Stab, insbesondere Kunststoffstab KS, eingesetzt. Um den Kanal 30 bzw. das biegeelastische Element 31 ist wenigstens ein Faserstrang 32 mit undehnbaren Fasern, insbesondere Fasern 25 der ersten Fasergruppe 24, herumgeführt, welcher Faserstrang 32 in den zwei Lagen 28 und 29 der ersten Fasergruppe 24 liegt. Demnach verläuft dieser Faserstrang 32 von einem oberen Befestigungsabschnitt 33 am Befestigungsende 21 der Spoilerlippe 16 nach unten in Richtung zum freien Ende 22, wird dort um den Kanal 30 herumgeführt und kann sich wieder bis in den wulstartigen Befestigungsabschnitt 33 erstrecken. Denkbar wäre es überdies, diesen Faserstrang 32 in zumindest einer der Lagen 28 oder 29 an wenigstens einer vorgebbaren Sollbiegestelle 34 zu unterbrechen, so dass in der Sollbiegestelle 34 die Anzahl der Lagen 28 bzw. 29 um eine Lage reduziert ist. In dem Bereich der Sollbiegestelle 34 wird die Steifigkeit der Spoilerlippe 16 reduziert, so dass hier ein gewolltes Biegen stattfinden kann. Eine derartige Sollbiegestelle 34 kann benachbart zum Befestigungsabschnitt 33 und/oder mit Abstand dazu vorgesehen sein, um das klappenartige Bewegen von der Ruhestellung RS in die Betriebsstellung BS der Spoilerlippe 16 zu vereinfachen. Diese Sollbiegestelle 34 kann also eine scharnierartige Einrichtung bilden.

Im in Fig. 2a gezeigten Ausführungsbeispiel reichen die Fasern 25 der ersten Fasergruppe 24 lediglich bis an das freie Ende 22 und an den Befestigungsabschnitt 33 heran, enden also jeweils davor. Somit wird benachbart zum Befestigungsabschnitt 33 die Sollbiegestelle 34 in einem faserfreien Bereich 34' ausgebildet. Da das biegeelastische Element 31 im Bereich des freien Endes 22 für eine ausreichende Steifigkeit der Spoilerlippe 16 sorgen kann, kann insbesondere aus Fertigungsgründen um das Herumführen der Fasern 25 bzw. des Faserstrangs 32 um den Kanal 30 verzichtet werden.

Das Betätigungselement 20 für die Spoilerlippe 16 ist in den Ausführungsbeispielen gemäß Fig. 2a und 3 jeweils aufblasbar und entleerbar ausgeführt und dazu weist wenigstens einen Schlauch 35 auf, der sich entlang der Fahrzeugbreite FB bzw. parallel zur Breitenerstreckung BE der Spoilerlippe 16 zwischen der Unterseite 10 und der Rückseite 36 der Spoilerlippe 16 erstreckt und in Betriebsstellung der Spoilerlippe 16 - in Fahrtrichtung FR gesehen - hinter der Spoilerlippe 16 liegt und diese gegenüber der Unterseite 10 abstützt. Der Schlauch 35 kann eine oder mehrere Kammern 37, 38, 39 aufweisen, die - nach Fig. 3 - übereinander liegen und ein im wesentlichen ovalen bzw. elliptischen Querschnitt, ggf. mit unterschiedlicher Querschnittgröße, aufweisen. Wie Fig. 2a zeigt, sind die einen elliptischen Querschnitt aufweisenden Kammern 37 und 38 mit ihren benachbart zueinander liegenden Enden aneinander befestigt und mit ihren voneinander beabstandet liegenden Enden 40, 41 im Bereich des freien Endes 22 der Spoilerlippe 16 bzw. an der Unterseite 10 befestigt.

Der Schlauch 35 mit seiner zumindest einen Kammer 37, 38 oder 39 wird vorzugsweise aus demselben Material wie die Matrix hergestellt und umfast jedenfalls ein dehnbares und elastisches Material, vorzugsweise das der Matrix 23. Die Wand 42 des Schlauches 35 bzw. der Kammern 37 bis 39 ist mit einer Faserverstärkung 43 (Fig. 2b) versehen, deren Fasern 44 in einer oder mehreren Lagen LG angeordnet sind und um den Umfang UM wenigstens einer der Kammern 37 bis 39 bzw. um den Umfang des Schlauches 35 in der Wand 42 verlaufen. Die Fasern 44 sind im wesentlichen undehnbar, wodurch ein übermäßiges Aufblasen der entsprechenden Kammer 37, 38 und/oder 39 bzw. des Schlauches im Querschnitt vermieden wird. Die Fasern 44 der Faserverstärkung 43 sind den undehnbaren Fasern 25 der ersten Fasergruppe 24 zugeordnet und vorzugsweise aus demselben Material gefertigt.

## Patentansprüche

1. Luftleiteinrichtung (12) für ein Kraftfahrzeug (1), mit einem Betätigungselement (20) und einer ganz oder teilweise über die Fahrzeugbreite (FB) verlaufenden Spoilerlippe (16), mit welchem Betätigungselement (20) die Spoilerlippe(16) aus einer eingefahrenen Ruhestellung (RS) in eine ausgefahrene Betriebsstellung (BS) verlagerbar ist, und welche Spoilerlippe (16) ein elastisches und dehnbares Material umfasst und aus Faserverbundwerkstoff hergestellt ist, dessen Matrix (23) dehnbar und elastisch ist, wobei eine erste Fasergruppe (24) in die Matrix (23) eingebettete Fasern (25) aufweist, die im Wesentlichen undehnbar sind, **dadurch gekennzeichnet, dass** die Fasern (25) der ersten Fasergruppe (24) quer zur Richtung der Fahrzeugbreite (FB), also quer zur Richtung der Breitenerstreckung (BE) der Spoilerlippe (16) verlaufen, und dass in die Matrix (23) eine zweite Fasergruppe (27) eingebettet ist, die Fasern (26) aufweist, die in Richtung der Breitenerstreckung (BE) der Spoilerlippe (16) verlaufen und die elastisch dehnbar sind.

2. Luftleiteinrichtung nach Anspruch 1, **dadurch gekennzeichnet, dass** die Fasern (25, 26) der ersten und/oder zweiten Fasergruppe (24, 27) als Gewebe oder Gestrick oder Gewirk in die Matrix (23) eingebettet sind.

3. Luftleiteinrichtung nach Anspruch 1, **dadurch gekennzeichnet, dass** der Faserverbundwerkstoff einschichtig ausgeführt ist.

4. Luftleiteinrichtung nach Anspruch 1, **dadurch gekennzeichnet, dass** an einem freien Ende (22) innerhalb der Spoilerlippe (16) ein sich entlang der Fahrzeugbreite (FB) erstreckendes zumindest biegeelastisches Element (31) angeordnet ist.

5. Luftleiteinrichtung nach Anspruch 4, **dadurch gekennzeichnet, dass** zumindest einige Fasern (25) der ersten Fasergruppe (24) um das biegeelastische Element (31) zumindest teilweise herumgeführt sind.

6. Luftleiteinrichtung nach Anspruch 1 oder 5, **dadurch gekennzeichnet, dass** die erste Fasergruppe mehrere Faserlagen (28, 29) aufweist, und dass zumindest ein Faserstrang (32) in zwei Faserlagen (28, 29) verläuft.

7. Luftleiteinrichtung nach Anspruch 6, **dadurch gekennzeichnet, dass** der Faserstrang (32) um das biegeelastische Element (31) herumgeführt ist.

8. Luftleiteinrichtung nach Anspruch 4, **dadurch gekennzeichnet, dass** die Fasern (25) der ersten Fasergruppe (24) bis an das biegeelastische Element (31) herangeführt sind.

9. Luftleiteinrichtung nach Anspruch 1, **dadurch gekennzeichnet, dass** die Fasern (25, 26) der ersten und/oder zweiten Fasergruppe (24, 27) eine oder mehrere Faserlagen (28, 29) aufweisen.

10. Luftleiteinrichtung nach vorhergehenden Anspruch 9, **dadurch gekennzeichnet, dass** die erste Fasergruppe (24) mit den mehreren Faserlagen (28, 29) in einem Sollbiegebereich (34) der Spoilerlippe (16) um zumindest eine Lage (28, 29) reduziert sind.

11. Luftleiteinrichtung nach Anspruch 1, **dadurch gekennzeichnet, dass** das Betätigungselement (20) für die Spoilerlippe (16) ein sich entlang der Fahrzeugbreite (FB) wenigstens abschnittweise erstreckender Schlauch (35) mit zumindest einer aufblasbaren Kammer (37, 38, 39) ist und dass der Schlauch (35) aus dehnbarem und elastischem Material, vorzugsweise dem der Matrix (23), hergestellt ist.

12. Luftleiteinrichtung nach Anspruch 11, **dadurch gekennzeichnet, dass** eine Wand (42) des Schlauchs bzw. einer Kammer (37, 38, 39) mit einer Faserverstärkung (43) versehen ist.

13. Luftleiteinrichtung nach Anspruch 12, **dadurch gekennzeichnet, dass** die Faserverstärkung (43) in der Wand (42) im wesentlichen undehnbare Fasern (44) aufweist, die zumindest teilweise um den Umfang (UM) der Kammer (37, 38, 39) herumgeführt und der ersten Fasergruppe (24) zugeordnet sind.

14. Luftleiteinrichtung nach Anspruch 1, **dadurch gekennzeichnet, dass** die Spoilerlippe (16) einen Befestigungsabschnitt (33) aufweist, mit dem sie mit dem Kraftfahrzeug (1) verbindbar ist.

15. Luftleiteinrichtung nach Anspruch 10 und 14, **dadurch gekennzeichnet, dass** die Fasern (25) der ersten Fasergruppe (24) bis in den Befestigungsabschnitt (33) gelegt sind und dass benachbart zum Befestigungsabschnitt (33) der Sollbiegebereich (34) ausgebildet ist.

16. Luftleiteinrichtung nach Anspruch 14, **dadurch gekennzeichnet, dass** die Fasern (25) der ersten Fasergruppe (24) vor dem Befestigungsabschnitt (33) enden.

## Claims

1. An air-conducting device (12) for a motor vehicle (1), with an actuating element (20) and a spoiler lip (16) extending completely or in part over the vehicle width (**FB**), with which actuating element (20) the spoiler lip (16) is displaceable out of a retracted rest position (**RS**) into an extended operative position (**BS**), and which spoiler lip (16) comprises a resilient and extensible material and is produced from composite fibre material, the matrix (23) of which is extensible and resilient, wherein a first fibre group (24) has fibres (25) which are embedded in the matrix (23) and which are substantially non-extensible, **characterized in that** the fibres (25) of the first fibre group (24) extend transversely to the direction of the vehicle width (**FB**), *i.e.* transversely to the direction of the width (**BE**) of the spoiler lip (16), and a second fibre group (27), which has fibres (26) which extend in the direction of the width (**BE**) of the spoiler lip (16) and which are resiliently extensible, is embedded in the matrix (23).

2. An air-conducting device according to Claim 1, **characterized in that** the fibres (25, 26) of the first and/or second fibre group (24, 27) are embedded in the form of a woven fabric or a knitted fabric or a machined-knitted fabric in the matrix (23).

3. An air-conducting device according to Claim 1, **characterized in that** the composite fibre material is produced in a single layer.

4. An air-conducting device according to Claim 1, **characterized in that** an at least bending-resilient element (31) extending along the vehicle width (FB) is arranged on a free end (22) inside the spoiler lip (16).

5. An air-conducting device according to Claim 4, **characterized in that** at least some fibres (25) of the first fibre group (24) are wound at least in part around the bending-resilient element (31).

6. An air-conducting device according to Claim 1 or 5, **characterized in that** the first fibre group has a plurality of fibre layers (28, 29), and at least one fibre strand (32) extends in two fibre layers (28, 29).

7. An air-conducting device according to Claim 6, **characterized in that** the fibre strand (32) is wound around the bending-resilient element (31).

8. An air-conducting device according to Claim 4, **characterized in that** the fibres (25) of the first fibre group (24) are brought up to the bending-resilient element (31).

9. An air-conducting device according to Claim 1, **characterized in that** the fibres (25, 26) of the first and/or second fibre group (24, 27) have one or more fibre layers (28, 29).

10. An air-conducting device according to the preceding Claim 9, **characterized in that** the first fibre group (24) with the plurality of fibre layers (28, 29) is reduced by at least one layer (28, 29) in a pre-determined bending region (34) of the spoiler lip (16).

11. An air-conducting device according to Claim 1, **characterized in that** the actuating element (20) for the spoiler lip (16) is a tube (35) extending at least locally along the vehicle width (**FB**) and with at least one inflatable chamber (37, 38, 39), and the tube (35) is produced from extensible and resilient material, preferably from that of the matrix (23).

12. An air-conducting device according to Claim 11, **characterized in that** one wall (42) of the tube or of a chamber (37, 38, 39) is provided with a fibre reinforcement (43).

13. An air-conducting device according to Claim 12, **characterized in that** the fibre reinforcement (43) has substantially non-extensible fibres (44) in the wall (42), the said fibres (44) being wound at least in part around the periphery (UM) of the chamber (37, 38, 39) and being associated with the first fibre group (24).

14. An air-conducting device according to Claim 1, **characterized in that** the spoiler lip (16) has a fastening portion (33) by which it is capable of being connected to the motor vehicle (1).

15. An air-conducting device according to Claims 10 and 14, **characterized in that** the fibres (25) of the first fibre group (24) are laid as far as the fastening portion (33), and the pre-determined bending region (34) is formed adjacent to the fastening portion (33).

16. An air-conducting device according to Claim 14, **characterized in that** the fibres (25) of the first fibre group (24) terminate in front of the fastening portion (33).

## Revendications

1. Système de déflecteur (12) pour un véhicule automobile (1), comportant un élément d'actionnement (20) et une lèvre de spoiler (16) qui s'étend sur la totalité ou sur une partie de la largeur (FB) du véhicule, lequel élément d'actionnement (20) pouvant déplacer la lèvre de spoiler (16) hors d'une position de repos (RS) rentrée dans une position de service (BS) sortie, et laquelle lèvre de spoiler (16) comporte un matériau élastique et extensible et est réalisée dans un matériau composite renforcé par des fibres, dont la matrice (23) est extensible et élastique, un premier groupe de fibres (24) comportant des fibres (25) qui sont incorporées dans la matrice (23) et qui sont sensiblement inextensibles, **caractérisé en ce que** les fibres (25) du premier groupe de fibres (24) s'étendent transversalement au sens de la largeur (FB) du véhicule, donc transversalement à la projection en largeur (BE) de la lèvre de spoiler (16), et **en ce qu'**un deuxième groupe de fibres (27) est incorporé dans la matrice (23), lequel comporte des fibres (26), qui s'étendent dans le sens de la projection en largeur (BE) de la lèvre de spoiler (16) et qui sont extensibles élastiquement.

2. Système de déflecteur selon la revendication 1, **caractérisé en ce que** les fibres (25, 26) du premier et/ou du deuxième groupe de fibres (24, 27) sont incorporées dans la matrice (23) sous forme de tissu, tulle ou tricot.

3. Système de déflecteur selon la revendication 1, **caractérisé en ce que** le matériau composite renforcé par des fibres est réalisé en une seule couche.

4. Système de déflecteur selon la revendication 1, **caractérisé en ce qu'**un élément (31) au moins élastique en flexion est disposé au niveau de l'extrémité libre (22) à l'intérieur de la lèvre de spoiler (16) en s'étendant le long de la largeur (FB) du véhicule.

5. Système de déflecteur selon la revendication 4, **caractérisé en ce qu'**au moins quelques fibres (25) du premier groupe de fibres (24) sont guidées au moins partiellement autour de l'élément (31) élastique en flexion.

6. Système de déflecteur selon la revendication 1 ou 5, **caractérisé en ce que** le premier groupe de fibres comporte plusieurs couches de fibres (28, 29) et **en ce qu'**au moins un brin de fibres (32) s'étend dans deux couches de fibres (28, 29).

7. Système de déflecteur selon la revendication 6, **caractérisé en ce que** le brin de fibres (32) est guidé autour de l'élément (31) élastique en flexion.

8. Système de déflecteur selon la revendication 4, **caractérisé en ce que** les fibres (25) du premier groupe de fibres (24) sont guidées jusqu'à l'élément (31) élastique en flexion.

9. Système de déflecteur selon la revendication 1, **caractérisé en ce que** les fibres (25, 26) du premier et/ou du deuxième groupe de fibres (24, 27) comportent une ou plusieurs couches de fibres (28, 29).

10. Système de déflecteur selon la revendication 9, **caractérisé en ce que** le premier groupe de fibres (24) comportant la pluralité de couches (28, 29) est diminué d'au moins une couche (28, 29) dans une zone destinée à la flexion (34) de la lèvre de spoiler (16).

11. Système de déflecteur selon la revendication 1, **caractérisé en ce que** l'élément d'actionnement (20) pour la lèvre de spoiler (16) est un tuyau flexible (35), qui s'étend au moins par tronçons le long de la largeur (FB) du véhicule et qui comporte au moins une chambre gonflable (37, 38, 39), et **en ce que** le tuyau flexible (35) est réalisé dans un matériau extensible et élastique, de préférence celui de la matrice (23).

12. Système de déflecteur selon la revendication 11, **caractérisé en ce qu'**une paroi (42) du tuyau flexible (35) ou d'une chambre (37, 38, 39) est munie d'un renforcement par fibres (43).

13. Système de déflecteur selon la revendication 12, **caractérisé en ce que** le renforcement par fibres (43) dans la paroi (42) comporte des fibres (44) sensiblement inextensibles, qui sont guidées au moins partiellement autour du pourtour (UM) de la chambre (37, 38, 39) et sont associées au premier groupe de fibres (24).

14. Système de déflecteur selon la revendication 1, **caractérisé en ce que** la lèvre de spoiler (16) comporte une partie de fixation (33) par laquelle elle peut être assemblée contre le véhicule automobile (1).

15. Système de déflecteur selon les revendications 10 et 14, **caractérisé en ce que** les fibres (25) du premier groupe de fibres (24) sont posées jusque dans la partie de fixation (33) et **en ce que** la zone destinée à la flexion (34) est adjacente à la partie de fixation (33).

16. Système de déflecteur selon la revendication 14, **caractérisé en ce que** les fibres (25) du premier groupe de fibres (24) se terminent devant la partie de fixation (33).
